Europäisches Patentamt

European Patent Office

Office européen des brevets

(19)

(11) Publication number: 0 270 045
A2

(12) **EUROPEAN PATENT APPLICATION**

(21) Application number: 87117636.8

(22) Date of filing: 28.11.87

(51) Int. Cl.4: **G02B 6/32** , G02B 6/38

(30) Priority: 04.12.86 US 937575
13.01.87 US 2883

(43) Date of publication of application:
08.06.88 Bulletin 88/23

(84) Designated Contracting States:
CH DE FR GB IT LI NL SE

(71) Applicant: ITT INDUSTRIES INC.
320 Park Avenue
New York, NY 10022(US)

(72) Inventor: Clark, Kenneth Milo
3 Delantera Drive
Irvine, CA 92720(US)
Inventor: Coutts, Bruce
P.O. Box 2162
Costa Mesa, CA 92628(US)
Inventor: Borsuk, Leslie Morton
11622 Kensington Road
Los Alamitos, CA 90720(US)

(74) Representative: Morstadt, Volker, Dipl.-Ing. et al
c/o Deutsche ITT Industries GmbH
Patent/Lizenzabteilung Postfach 840
Hans-Bunte-Strasse 19
D-7800 Freiburg/Brsg.(DE)

(54) Optic fiber contact.

(57) An optic fiber connection system is provided which enables the forming of a lens or bead at the end of an optic fiber and the positioning of the lens for coupling to another optic fiber. The contact has a front end portion formed of a dielectric. A hole extends along the contact axis for receiving the optic fiber. A cross aperture in the dielectric front end portion extends perpendicular to the hole. With the tip of the optic fiber lying in the cross aperture, heat is applied to the tip to form a nearly spherically shaped lens thereon by electric arc heating. Because the front end portion is formed of a dielectric, it does not interfere with the creation of the arc and the heating of the fiber. The arc is formed by positioning the tips of a pair of electrodes to lie slightly within opposite ends of the cross-aperture, to avoid establishing an arc between the electrodes which passes around the contact instead of through the cross-aperture. The electrodes are spaced apart by at least about eight times the diameter of the optic fiber, to avoid deposition of vapors from the heated optic fiber onto the electrodes.

FIG. 9

## OPTIC FIBER CONTACT

## BACKGROUND OF THE INVENTION

A pair of optical fibers can be coupled by projecting the end of each fiber through a contact and forming the fiber tip into a lens. The lenses transmit light between the optic fibers even though the spacing and alignment of the lenses is anywhere within a moderate range. Lensing, or the formation of an end portion of an optical fiber into a bead or lens, can be reliably accomplished by heating the fiber with an electric arc. The tips of a pair of electrodes are positioned on opposite sides of an end portion of a optic fiber which lies at a cross-aperture in the end of the contact. The fiber may have a diamter of about .005 inch while the contact has a diameter of about one-tenth inch, so the arc must pass through a tiny region. In prior attempts to establish the arc, it has been found that the arc sometimes passes around the side of the contact rather than across the optic fiber end portion. Further, because the contact in which the fiber is mounted is formed of metal, the contact has interfered in the creation of the arc and the forming of the lens. More specifically, in the prior art arrangements, the arc established between the electrodes quickly becomes erratic, in that the arc changes in its path and the sizes of the lenses become erratic (sometimes larger and sometimes smaller) and the shapes erratically deviate from spherical.

A connection device and system for forming lenses at the ends of optic fibers by heating with an electric arc, which enables close and reliable control of the arc while assuring at least a moderate electrode life, would be of considerable value.

## SUMMARY OF THE INVENTION

According to one aspect of the invention, there is provided an optic fiber connection device comprising a contact having forward and rearward end portions, opposite sides, and an axis. A hole extends along the axis of the contact for receiving an optical fiber which has a front end. The contact front end portion has a cross aperture which extends substantially perpendicular to said axis and which intersects the hole to receive a lens located at the front end of an optic fiber which extends through said hole. The cross aperture extends through the contact between its opposite sides to pass heat by means of an electric arc that can melt the end of an optic fiber in the cross aperture. The contact front end portion is formed of a dielectric material which does not interfere with the creation of the electric arc through the cross aperture and the heating of said optic fiber by the arc.

According to another aspect of the invention, there is provided a system and method for forming a lens at the end of an optic fiber while the fiber projects through a hole in a contact, with the end portion of the fiber near the tip of the contact, by passing heat through the fiber by forming an arc between a pair of electrodes comprising means holding a pair of electrodes with their tips located at opposite sides of a cross-aperture in the contact and on opposite sides of said fiber end portion. The electrodes are held so their tips lie within the opposite sides of the cross-aperture spaced apart by at least about eight times the diameter of the fiber, thereby avoiding degredation of the electrodes and assuring reliable control of the arc so that reproducible lenses can be formed.

## BRIEF DESCRIPTION OF THE DRAWINGS

Fig 1. 1 is a perspective view of one form of the system of the present invention, showing the manner in which a lens is formed on an optic fiber in a connection device.

Fig. 2 is a sectional view of the system of Fig. 1.

Fig. 3 is a view taken on the line 3-3 of Fig. 2.

Fig. 4 is a sectional view of a connection assembly which includes two mating connection devices as shown in Fig. 2.

Fig. 5 is an enlarged partial sectional view of the connection device of Fig. 2.

Fig. 6 is a sectional view of an optic fiber connection device constructed in accordance with another embodiment of the invention.

Fig. 7 is a view taken on the line 7-7 of Fig. 6.

Fig. 8 is a partial perspective view of the connection device of Fig. 6.

Fig. 9 is a perspective view of a preferred system for forming a lens at the end of the optic fiber in a connection device.

Fig. 10 is a plan view of the system of Fig. 9.

Fig. 11 is a view taken on the line 11-11 of Fig. 10.

## DESCRIPTION OF THE PREFERRED EMBODIMENTS

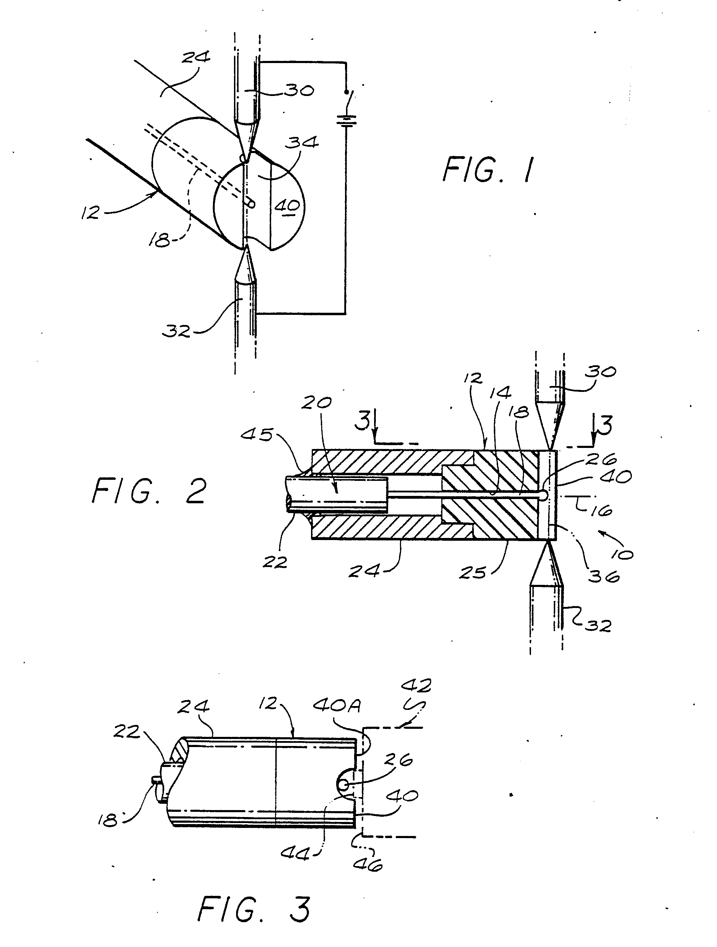

Fig. 2 illustrates an optic fiber connection device 10 comprising a contact 12 which has a longitudinal passage or hole 14 extending along its axis 16, for receiving an optic fiber 18. The optic fiber is part of an optic fiber assembly 20 which includes a buffer 22 whose front end has been stripped off. The contact 12 includes a ferrule 24 and a bushing 25 mounted on the front end of the ferrule. In order to effectively couple the front end of the optic fiber to another similar optic fiber, a lens or bead 26 is formed at the end of the fiber, by heating the fiber end until it melts, with surface tension forming the melted end into a bead having a rounded and optically clear end. The contact 12 may be used to couple the optic fiber 18 to an external optical device, such as to another similar optic fiber (not shown), as described above, or to a light source (not shown) or light detector (not shown). The optic fiber end is heated by positioning a pair of electrodes 30, 32 on opposite side of the optic fiber end on an imaginary line 36 that extends along the cross aperture, and applying a voltage between the electrodes to establish an arc between them that passes through the optic fiber to heat it. The contact is formed with a cross aperture 34 that provides access to the optic fiber end to form the lens thereon.

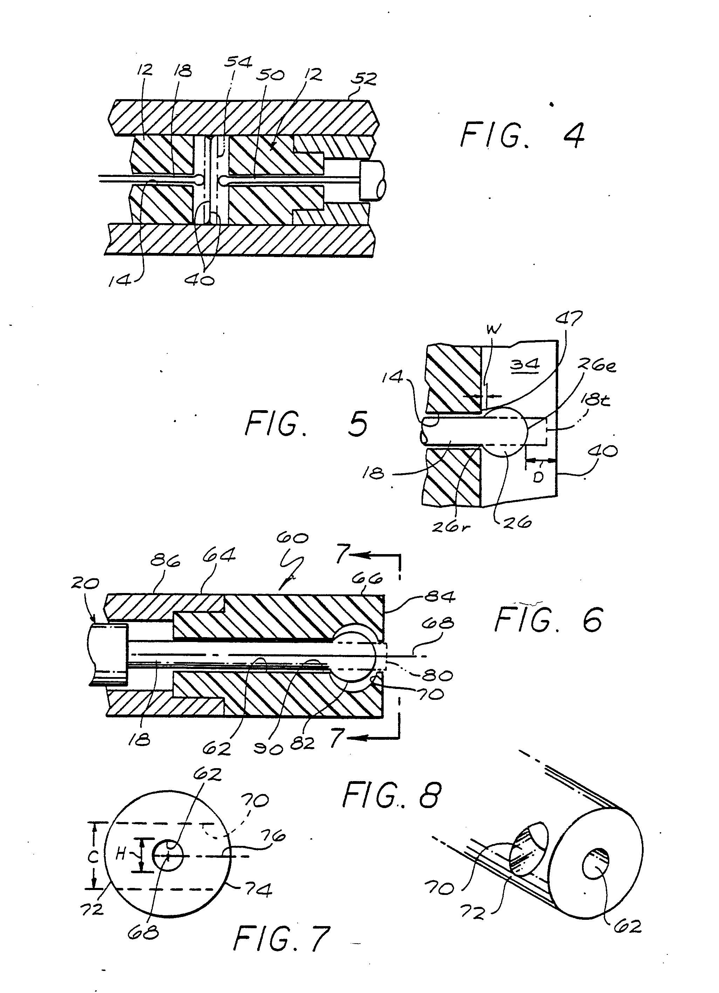

The lens 26 is preferably formed so upon forming it lies at the final position it is to assume for coupling to another optic fiber. As shown in Fig. 5 this can be accomplished by locating the tip 18t of the unlensed optic fiber end at a position where it will form a lens whose end 26e is spaced at a predetermined distance D from the contact end. The tip 18t is located so the volume of the unlensed fiber between the fiber tip 18t and the desired position of the root 26r of the bead, equals the volume of the lens 26 to be formed. Prior to the lens 26 being formed, the optic fiber assembly can be permanently fixed in position in the contact 12, without the need to slide the optic fiber 18 along its length after the lens 26 has been formed.

Avoidance of the need to slide the lensed fiber, especially in the rearward direction, minimizes the danger to the lens. In the final position, the lens root 26r is spaced a distance w forward of the end walls 47 of the hole.

In the prior art, the entire contact 12 has been constructed of stainless steel, to provide sufficient rigidity and strength. Applicant forms the ferrule 24 of stainless steel or other metal, but forms the bushing 25 of a dielectric material. Applicant has discovered that by forming the bushing of a dielectric, shorting out, or interference with, the electric arc formed between the electrodes is avoided.

The preferred techniques forms the lens 26 in its desired, final position for use, but an alternative method may be used to initially form the lens rearward of its final position. After the lens is formed, a positioning tool, indicated at 42 in Fig. 3, can be positioned with a lens-engaging portion 44 projected into the contact, while another portion 46 abuts the extreme end of 40A of the contact. The optic fiber can then be gently pushed forward in the direction of arrow F until the lens abuts the tool portion 44. Then the optic fiber assembly can be fixed in place, as by applying epoxy 45 (Fig. 2) between the buffer 22 and holder 24, or by crimping the optic fiber assembly in place. The fact that the optic fiber does not have to be pulled back results in avoiding the danger that the lens will be broken off by being pulled against the end walls 47 (fig. 5) of the end of the narrow contact hole.

Fig. 4 illustrates a connection assembly where the optic fiber 18 is optically coupled to another similarly mounted optic fiber 50. The contacts 12 which hold the two optic fibers are mounted in a housing 52 which holds the connectors in alignment, with their ends 40 in abutment. In order to hold the optic fibers 18, 50 in alignment, it is important that the holes 14 closely receive the portions of the optic fiber which lie behind the lens, so the holes 14 have a diameter less than 50% greater than the diameter of the optic fiber. A transparent intermediate sheet 54 is sometimes placed between the lenses to facilitate their coupling. Although the lenses at the end of the two optic fibers provide good coupling over a range of separations, it is still important to maintain their separation within such a range.

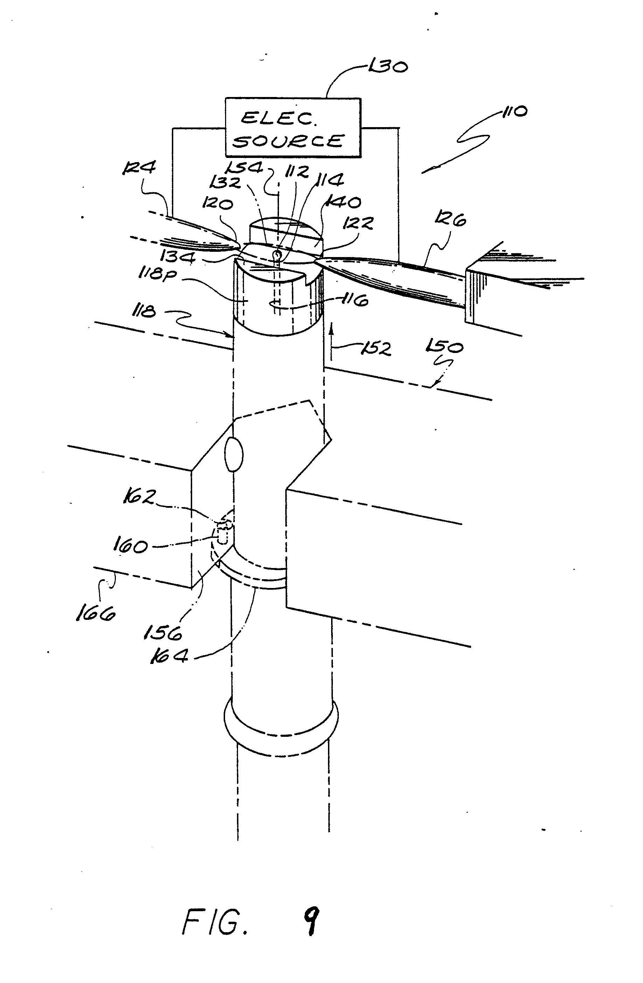

Figs. 6-8 illustrate another optic fiber connection device 60 which includes a hole 62 extending through the entire length of the contact between its opposite end portions 64, 66, along the axis 68 of the connector. A cross aperture 70 of greater width C than the diameter H of the hole extends between opposite sides 72, 74 of the contact along a direction or axis 76 which is substantially perpendicular to the axis 68 of the hole. Electrodes can be positioned in line with the cross aperture 70 on opposite sides of the hole axis 68 to create an arc that passes through the cross aperture to melt an optic fiber whose tip initially lies at the position 80. The resulting lens 82 lies within the cross aperature 70.

Figs. 9-11 illustrate a preferred system 110 for forming a lens 112 at the end of an optic fiber 114, while the fiber projects through a hole 116 in a contact 118. The lens is formed by locating an end portion of the optic fiber between the tips 120, 122 of a pair of electrodes 124, 126. An electrical source 130 is connected between the electrodes to generate an arc 132 between them which passes by the optic fiber to melt it. As the end of the optic fiber melts, it forms a bead or lens.

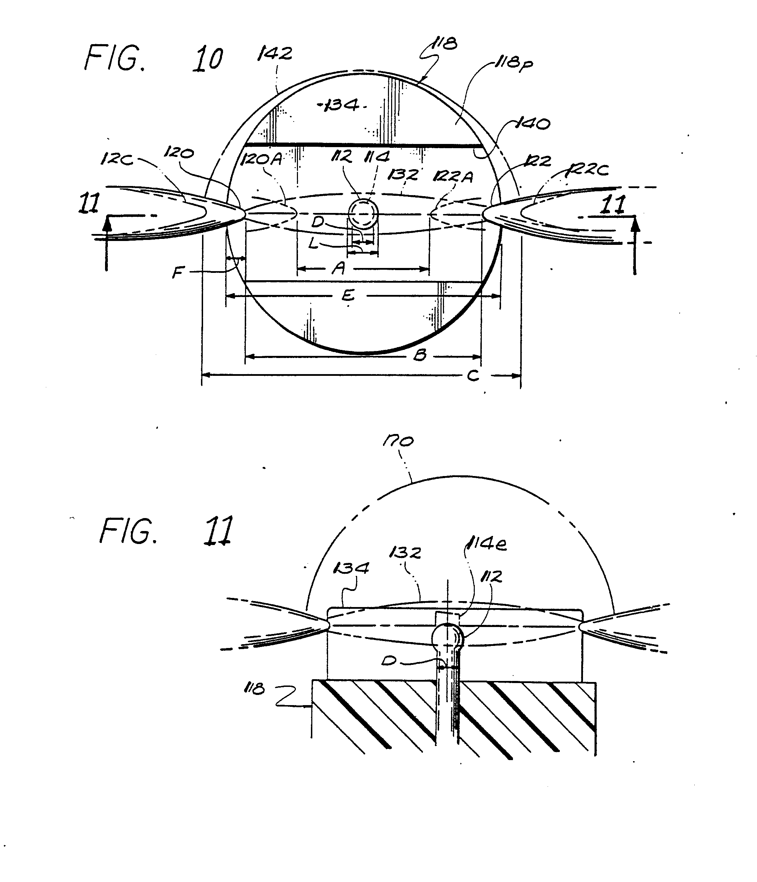

Figs. 10 and 11 show the relative positions of the electrode tips with respect to the other parts of the system. Applicant tried using a spacing A between the electrode tips 120A and 122A, of about 0.030 inch in forming a lens on a fiber 114 having a fiber diameter D of about 140 micrometers (about .005 inch) to form a lens of a diameter L of about 200 micrometers (.008 inch). The initial electrode tip spacing A of about .030 inch is about the same as has been used in splicing the tips of a pair of fibers, except that a higher current (about 30 miliamperes root mean square of an AC arc) and time (about 3-6 seconds) was used to melt sufficient fiber to form the lens. It was found that the electrodes degraded with use, so the arc became erratic in that its path and intensity was unpredictable. This resulted in lenses of erratic size and with erratic deviations from a desired shape (spherical, and with the center on the axis of the fiber). Applicant believes that silicon vapor is created during the melting of the fiber, which becomes deposited on the tips of the electrodes and which degrades them. Applicant found that separating the electrodes by a distance B of at least 8 times the diameter D of the fiber, and preferably at least 10 times the fiber diameter, avoids significant buildup of silicon vapors from the melting fiber. It is believed that at such a separation, those vapors that would become deposited on the electrodes are boiled off the electrode tips faster than they can accumulate. The most common optic fiber sizes are 125 um, 140 um, and 250 um. Applicant finds that a 0.060 inch separation of electrodes is adequate for the 125 um and 140 um fibers, and substantially adequate (slight erraticism) for the 250 um fibers.

Applicant has tried various separations of the electrodes, including a configuration where the electrodes at 120C, 122C were separated a distance greater than the diameter E of the contact. It was found that the arc would occasionally take a path indicated at 142, wherein it passed around the outside of the contact 118, instead of passing through the cross-aperture 140. By properly sizing the diameter of the contact 118 at its cross-aperture, and the separation of the electrode tips, so that the tips lay a distance F within the ends of the cross-aperture, such arcing around the contact (instead of through the cross-aperture and across the fiber 114) was avoided. In a contact 118 for holding a fiber 114 of a diameter D of about .005 inch (with a lens 12 of a diameter L of about .008 inch) the contact diameter (in width at the cross-aperture) E is about .070 inch and the separation B between the electrode tips is about .060 inch. Each electrode tip extends a distance F of about .003 to .005 inch inside the ends of the cross-aperture. As mentioned previously the cross-aperture is formed in a contact portion 118p constructed of a dielectric material. There can be a tendency for the dielectric material to repel the arc to encourage it to pass around the contact instead of through the cross-aperture, all of which is avoided by a closer separation of the electrode tips than the length of the cross-aperture.

With the space B between the electrode tips less than the diameter of the contact, it could be difficult to insert the electrode tips into the cross-aperture. The need to move the electrodes together and apart is avoided because the cross-aperture 140 extends to the extreme end or tip 134 of the contact. Also, the contact is held in a fixture 150 (Fig. 1) which enables the contact to move upwardly, in the direction of arrow 152 along the axis 154 of the contact and fiber until an end portion of the optic fiber lies between the electrode tips. The electrode 150 includes a vertical slot 156 which positions the contact along the axis 154, while permitting the contact to slide along the slot. As the contact is pushed up and approaches its final desired position, a pin 160 on the fixture enters a keyway 162 formed on a ferrule 164 attached to the contact, to assure the proper orientation of the contact about the axis 154. The contact can slide up until the ferrule abuts a lower surface 166 on the fixture. During such upward movement, the cross-aperture 140 in the contact becomes aligned with the electrodes, and brings the end portion of the optic fiber between the electrode tips.

Fig. 11 illustrates the optical fiber with an end portion 114e at the final resting place at which it lies prior to establishing the arc 132 which will melt the end portion of the fiber into a lens 112. It may be noted that the arc has a bright blue color in the intense region indicated at 132, but has a faint blue color extending out to the location 170 which extends largely spherically.

Thus, the invention provides a system for forming a lens at the end of an optic fiber, especially while the fiber projects through a hole in a contact and lies within a cross-aperture of the contact. A pair of electrodes are held with their tips on opposite sides of a fiber end portion, with at least one electrode tip, and preferably both, lying within the ends of the cross-aperture, which avoids the establishment of an arc around the contact. The separation of the electrodes is preferably at least about eight times the diameter of the optic fiber, which avoids degradation of the electrodes with use. The contact aperture is formed in a dielectric bushing. The aperture preferably extends to the extreme tip of the contact, so the electrode can be positioned by moving the contact between the electrodes until a location along the cross-aperture lies between the electrode tips.

Although particular embodiments of the invention have been described and illustrated herein, it is recognized that modifications and variations may readily occur to those skilled in the art, and consequently, it is intended that the claims be interpreted to cover such modifications and equivalents.

## Claims

1. Optic fiber connection device comprising a contact having forward and rearward end portions, opposite sides, and an axis, and having a hole extending along said axis for receiving an optical fiber which has a front end, said contact front end portion having a cross aperture which extends substantially perpendicular to said axis and which intersects said hole to receive a lens located at the front end of an optic fiber which extends through said hole, said cross aperture extending through said contact between said opposite sides to pass heat by means of an electric arc that can melt the end of an optic fiber in said cross aperture characterized in that said contact front end portion is formed of a dielectric material which does not interfere with the creation of the electric arc through said cross aperture and the heating of said optic fiber by said arc.

2. The device described in claim 1 wherein: said cross aperture comprises a slot in said front end portion lying on said axis and extending to the extreme outer end of said contact, said slot dividing said contact front end portion into a pair of front portions lying on opposite sides of said axis.

3. The device described in claim 1 wherein: said cross aperture has a substantially circular cross section.

4. A system for forming a lens at the end of an optic fiber while the fiber projects through a hole in a contact, with the end portion of the fiber near the tip of the contact, by passing heat through the fiber by forming an arc between a pair of electrodes comprising means holding a pair of electrodes with their tips located at opposite sides of a cross-aperture in the contact and on opposite sides of said fiber end portion characterized in that said holding means holds said electrodes so their tips lie within said opposite sides of said cross-aperture spaced apart by at least about eight times the diameter of the fiber, whereby to avoid degradation of the electrodes.

5. The system described in claim 4 wherein : said cross-aperture extends to the extreme outer end of said contact; and said holding means includes means for permitting movement of said contact in a direction along its length and substantilly perpendicular to said imaginary line, so the contact outer end can approach said imaginary line and said electrodes can enter the opposite ends of said cross-aperture.

6. The system described in claim 4 including: a contact having an axis and a hole extending through said axis, and having a dielectric outer end portion with a cross-aperture therein extending substantially perpendicular to said axis and to the extreme outer end of said contact.

7. The system described in claim 4 wherein: said optic fiber has a diameter of about .005 to 0.10 inch; and the distance between said tips is about .060 inch.

8. A method for forming a lens at the end of an optic fiber while the fiber projects through a hole in a contact, with the end portion of the fiber near the tip of the contact by passing heat through the fiber by forming an arc between a pair of electrodes comprising holding a pair of electrodes with their tips located at opposite sides of a cross-aperture in the contact and on opposite sides of said fiber end portion characterized in that said electrodes are held so their tips lie within said opposite side of said cross-aperture spaced apart by at least about eight times the diameter of the fiber, whereby to avoid degradation of the electrodes.

9. The method described in claim 8 wherein there is provided a contact having an axis and a hole extending through said axis and having a dielectric outer end portion with a cross-aperture therein extending substantially perpendicular to said axis and to the extreme outer end of said contact.

10. The method described in claim 9 wherein: said optic fiber has a diameter of about .005 to 0.10 inch; and said tips are spaced a distance of about .060 inch.

FIG. 1

FIG. 2

FIG. 3

FIG. 4

FIG. 5

FIG. 6

FIG. 8

FIG. 7

FIG. 9

FIG. 10

FIG. 11